# EUROPÄISCHE PATENTANMELDUNG

(11) **EP 3 413 085 A1**
(43) Veröffentlichungstag der Anmeldung: **12.12.2018**
(21) Anmeldenummer: 18175947.3
(22) Anmeldetag: 05.06.2018
(51) Int. Cl.: G01S 17/93, G01S 7/48

(54) **VERFAHREN ZUM UNTERSTÜTZEN EINES FAHRERS EINES GESPANNS BEIM MANÖVRIEREN MIT DEM GESPANN, TOTWINKELSYSTEM SOWIE GESPANN**

(30) Priorität: 09.06.2017 DE 102017112785
(71) Anmelder: Valeo Schalter und Sensoren GmbH, 74321 Bietigheim-Bissingen (DE)
(72) Erfinder: Kozak, Ondrej, 10800 Prag (CZ); Krejci, Petr, 10800 Prag (CZ); Sela, Yaron, 10800 Prag (CZ); Zednik, Pavel, 10800 Prag (CZ)

(57) **Zusammenfassung**

Die Erfindung betrifft ein Verfahren zum Unterstützen eines Fahrers eines durch ein Zugfahrzeug (2) und einen Anhänger (3) gebildeten Gespanns (1) beim Manövrieren mit dem Gespann (1), bei welchem Lidar-Sensordaten einer Lidar-Sensorvorrichtung (6) des Zugfahrzeugs (2) aus einem Umgebungsbereich (5) des Gespanns (1) empfangen werden, mit dem Anhänger (3) korrespondierende Detektionspunkte (9) in den Lidar-Sensordaten identifiziert werden und in Abhängigkeit von den mit dem Anhänger (3) korrespondierenden Detektionspunkten (9) eine Totwinkelregion (8) für den Anhänger (3) definiert wird wobei ein den Anhänger (3) beschreibendes kinematisches Modell (17) vorgegeben wird, zumindest eine mit dem kinematischen Modell (17) zumindest bereichsweise überlappende Modell-Unterregion bestimmt wird, die innerhalb der Modell-Unterregion liegenden Detektionspunkte (9) als mit dem Anhänger (3) korrespondierende Detektionspunkte (9) klassifiziert werden, das kinematische Modell (17) des Anhängers (3) basierend auf den mit dem Anhänger (3) korrespondierenden Detektionspunkten (9) aktualisiert wird und die Totwinkelregion (8) für den Anhänger (3) in Abhängigkeit von dem aktualisierten kinematischen Modell (17) des Anhängers (3) aktualisiert wird. Die Erfindung betrifft außerdem ein Totwinkelsystem (4) sowie ein Gespann (1).

## Beschreibung

Die Erfindung betrifft ein Verfahren zum Unterstützen eines Fahrers eines durch ein Zugfahrzeug und einen Anhänger gebildeten Gespanns beim Manövrieren mit dem Gespann, bei welchem Lidar-Sensordaten einer Lidar-Sensorvorrichtung des Zugfahrzeugs aus einem Umgebungsbereich des Gespanns empfangen werden, mit dem Anhänger korrespondierende Detektionspunkte in den Lidar-Sensordaten identifiziert werden und in Abhängigkeit von den mit dem Anhänger korrespondierenden Detektionspunkten eine Totwinkelregion für den Anhänger definiert wird. Die Erfindung betrifft außerdem ein Totwinkelsystem sowie ein Gespann.

Totwinkelsysteme für Kraftfahrzeuge sind bereits aus dem Stand der Technik bekannt. Dabei wird ein für den Fahrer schlecht oder kaum einsehbarer Teilbereich in einem Umgebungsbereich des Kraftfahrzeugs, ein so genannter toter Winkel, von einer Sensoreinrichtung des Kraftfahrzeugs überwacht. Wenn sich ein Objekt, beispielsweise ein anderes Fahrzeug oder ein Fahrradfahrer, in dem toten Winkel befindet, kann ein Warnsignal für den Fahrer des Kraftfahrzeugs generiert werden. Beispielsweise können solche Totwinkelsysteme einen Radarsensor aufweisen, welcher in einem hinteren Stoßfänger des Kraftfahrzeugs angeordnet ist. In diesem Fall kann das Totwinkelsystem jedoch nicht betrieben werden, wenn ein Anhänger an das Kraftfahrzeug angekoppelt ist, da der Anhänger den Radarsensor verdeckt.

In der US 2011/0181457 A1 ist ein Fahrzeuglängensensor zum Bestimmen einer Länge eines Fahrzeugs mit einer variablen Länge, beispielsweise eines Lkws, beschrieben. Ein solcher Fahrzeuglängensensor kann beispielsweise einen Lidar-Sensor aufweisen. Der Fahrzeuglängensensor kann beispielsweise eine Totwinkelwarnung bereitstellen, indem er einen Hinweis an einen Fahrer des Fahrzeugs mit der variablen Länge ausgegeben kann, wenn sich neben dem Fahrzeug mit der variablen Länge in einer Distanz über die Länge des Fahrzeugs ein anderes Fahrzeug aufhält. Hier wird der Warnbereich also lediglich an die Länge des Fahrzeugs, beispielsweise die Länge des Lkws, angepasst.

Es ist Aufgabe der vorliegenden Erfindung, eine besonders zuverlässiges Totwinkelsystem für ein Gespann aufweisend ein Zugfahrzeug und einen Anhänger bereitzustellen.

Diese Aufgabe wird erfindungsgemäß durch ein Verfahren, durch ein Totwinkelsystem sowie durch ein Gespann mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Gemäß einer Ausführungsform eines Verfahrens zum Unterstützen eines Fahrers eines durch ein Zugfahrzeug und einen Anhänger gebildeten Gespanns beim Manövrieren mit dem Gespann werden insbesondere Lidar-Sensordaten einer Lidar-Sensorvorrichtung des Zugfahrzeugs aus einem Umgebungsbereich des Gespanns empfangen, mit dem Anhänger korrespondierende Detektionspunkte in den Lidar-Sensordaten identifiziert und in Abhängigkeit von den mit dem Anhänger korrespondierenden Detektionspunkten eine Totwinkelregion für den Anhänger definiert. Insbesondere wird ein den Anhänger beschreibendes kinematisches Modell vorgegeben, zumindest eine mit dem kinematischen Modell zumindest bereichsweise überlappende Modell-Unterregion bestimmt und die innerhalb der Modell-Unterregion liegenden Detektionspunkte als mit dem Anhänger korrespondierende Detektionspunkte klassifiziert. Das kinematische Modell des Anhängers kann basierend auf den mit dem Anhänger korrespondierenden Detektionspunkten aktualisiert werden und die Totwinkelregion für den Anhänger in Abhängigkeit von dem aktualisierten kinematischen Modell des Anhängers aktualisiert werden.

Gemäß einer besonders bevorzugten Ausführungsform eines Verfahrens zum Unterstützen eines Fahrers eines durch ein Zugfahrzeug und einen Anhänger gebildeten Gespanns beim Manövrieren mit dem Gespann werden Lidar-Sensordaten einer Lidar-Sensorvorrichtung des Zugfahrzeugs aus einem Umgebungsbereich des Gespanns empfangen, mit dem Anhänger korrespondierende Detektionspunkte in den Lidar-Sensordaten identifiziert und in Abhängigkeit von den mit dem Anhänger korrespondierenden Detektionspunkten eine Totwinkelregion für den Anhänger definiert. Darüber hinaus wird ein den Anhänger beschreibendes kinematisches Modell vorgegeben, zumindest eine mit dem kinematischen Modell zumindest bereichsweise überlappende Modell-Unterregion bestimmt und die innerhalb der Modell-Unterregion liegenden Detektionspunkte als mit dem Anhänger korrespondierende Detektionspunkte klassifiziert. Das kinematische Modell des Anhängers wird basierend auf den mit dem Anhänger korrespondierenden Detektionspunkten aktualisiert und die Totwinkelregion für den Anhänger wird in Abhängigkeit von dem aktualisierten kinematischen Modell des Anhängers aktualisiert.

Mittels des Verfahrens kann beispielsweise ein Fahrerassistenzsystem in Form von einem Totwinkelsystem realisiert werden, welches den Fahrer des Gespanns warnen kann, wenn sich Objekte, beispielsweise andere Fahrzeug oder Fahrerradfahrer, in einem toten Winkel des Gespanns befinden. Dieser tote Winkel stellt einen für den Fahrer schlecht oder kaum einsehbaren Teilbereich in dem Umgebungsbereich des Gespanns dar. Das Gespann kann beispielsweise ein Kraftfahrzeug in Form von einem Pkw sowie einen Anhänger, beispielsweise einen Wohnanhänger oder einen Pferdeanhänger, aufweisen. Auch kann das Gespann ein Lastzug mit einem Lkw und zumindest einem Anhänger oder ein Sattelzug mit einer Sattelzugmaschine und einem Sattelauflieger sein. Die Totwinkelregion des Anhängers ist dabei insbesondere abhängig von einer aktuellen Lage des Anhängers bezüglich des Zugfahrzeugs sowie einer Geometrie des Anhängers. Die Lage und die Geometrie des Anhängers werden über das kinematische Modell des Anhängers definiert bzw. angegeben.

Zum Definieren bzw. Bestimmen der Totwinkelregion des Anhängers, welche den toten Winkel in dem Umgebungsbereich des Anhängers repräsentiert, werden die Lidar-Sensordaten von der Lidar-Sensorvorrichtung des Zugfahrzeugs empfangen. Die Lidar-Sensorvorrichtung ist insbesondere an einem Seitenbereich des Zugfahrzeugs, beispielsweise an einem Seitenspiegel des Zugfahrzeugs, angeordnet, wobei sich der Anhänger zumindest zeitweise zumindest teilweise in einem Erfassungsbereich der Lidar-Sensorvorrichtung befindet. Dies bedeutet, dass sich der Anhänger nicht dauerhaft in dem Erfassungsbereich der Lidar-Sensorvorrichtung befinden muss bzw. dauerhaft detektierbar sein muss. Beispielsweise kann sich der Anhänger nur während eines Abbiegemanövers des Gespanns, bei welchem der Anhänger bezüglich des Zugfahrzeugs ausgeschwenkt ist, in dem Erfassungsbereich der Lidar-Sensorvorrichtung befinden. Zum Erfassen des Anhängers kann die Lidar-Sensorvorrichtung Lichtpulse in Richtung des Anhängers aussenden und die zumindest teilweise an dem Anhänger reflektierten Lichtpulse als die Lidar-Sensordaten wieder empfangen. Der reflektierte Lichtpuls kann in mehreren Lichtstrahlen, beispielsweise in sechzehn Lichtstrahlen, empfangen werden. Jeder Lichtstrahl ist dabei ein Teilbereich des reflektierten Lichtpulses. Zum Empfangen der Lichtstrahlen des reflektierten Lichtpulses kann die Lidar-Sensorvorrichtung, welche beispielsweise als eine Solid-State-Lidar-Sensorvorrichtung ausgebildet ist, eine Empfangseinrichtung mit mehreren Empfangselementen, beispielsweise mit sechzehn Empfangselementen, aufweisen. Die Empfangselemente können beispielsweise Photodetektoren in Form von lichtsensitiven Halbleiterbauelementen, beispielsweise Photodioden, aufweisen. Die Empfangselemente können beispielsweise in einer Matrix, also spaltenweise und/oder zeilenweise, angeordnet sein. Jedem Empfangselement kann dabei eine Reflexionsrichtung bzw. ein Reflexionswinkel zugeordnet sein, sodass ein Empfangselement insbesondere nur diejenigen Lichtstrahlen empfängt, welche aus der dem Empfangselement zugehörigen Reflexionsrichtung auf die Lidar-Sensorvorrichtung fallen.

Ein Lichtstrahl beschreibt einen Verlauf der Intensität des reflektierten Lichtes, also die Verteilung der Intensitätswerte über die Zeit. Dieser Verlauf kann nach Intensitätsspitzen bzw. Intensitätspeaks durchsucht werden, welche als Maximalwerte der Intensität in dem Verlauf identifizierbar sind. Diese Intensitätspeaks repräsentieren die Detektionspunkte bzw. Detektionen, sogenannte Echos, welche zu Reflexionspunkten in dem Umgebungsbereich korrespondieren. Ein solcher Reflexionspunkt kann beispielsweise ein Punkt auf einer Seitenwand des Anhängers sein. Dabei können Positionswerte für die Detektionspunkte bestimmt werden, welche beispielsweise die räumliche Lage der Reflexionspunkte relativ zu dem Zugfahrzeug beschreiben. Zum Bestimmen der Positionswerte können für die Detektionspunkte jeweils ein Abstandswert sowie ein Reflexionswinkel bestimmt werden. Der Abstandswert für einen Detektionspunkt kann über Laufzeitmessungen anhand eines zu dem Detektionspunkt gehörigen Zeitpunkts bzw. Zeitstempels innerhalb des Verlaufes bestimmt werden. Da insbesondere jedem Empfangselement eine Reflexionsrichtung zugeordnet ist, also jedes Empfangselement mit einem bestimmten Reflexionswinkel korrespondiert, kann anhand des Empfangselementes für den Detektionspunkt zusätzlich zu dem Abstandwert der Reflexionswinkel bestimmt werden.

Anhand der Positionswerte der Detektionspunkte relativ zum Zugfahrzeug können die mit dem Anhänger korrespondierenden Detektionspunkte identifiziert werden. Beispielsweise werden anhand der jeweiligen Positionswerte diejenigen Detektionspunkte identifiziert, welche eine vorbestimmte Lage relativ zu dem kinematischen Modell des Anhängers aufweisen. Dazu kann in Abhängigkeit von dem kinematischen Modell des Anhängers die Modell-Unterregion bestimmt werden. Die Modell-Unterregion beschreibt einen Bereich relativ zu dem kinematischen Modell des Anhängers, innerhalb welchem sich der Anhänger abweichend von dem kinematischen Modell befinden kann. Die Modell-Unterregion repräsentiert also einen Toleranzbereich, innerhalb welchem Detektionspunkte, auch wenn sie außerhalb des kinematischen Modells liegen, als zu dem Anhänger gehörig identifiziert werden. Dann werden, beispielsweise anhand der Positionswerte der Detektionspunkte, diejenigen Detektionspunkte identifiziert, welche innerhalb der Modell-Unterregion liegen. Bei diesen Detektionspunkten wird angenommen, dass sie zu tatsächlichen Reflexionspunkten auf der Oberfläche des Anhängers korrespondieren. Diese mit dem Anhänger korrespondierenden Detektionspunkte können zum Aktualisieren des Anhängers verwendet werden, beispielsweise indem die durch das kinematische Modell angegebene Lage des Anhängers aktualisiert wird, wenn sich zumindest eine vorbestimmte Anzahl an Detektionspunkten des Anhängers außerhalb des kinematischen Modells befindet. Dies kann beispielsweise aus einem veränderten Anhängewinkel des Anhängers bezüglich des Zugfahrzeugs resultieren. Das kinematische Modell des Anhängers wird also mittels der Lidar-Sensordaten der Lidar-Sensorvorrichtung aktualisiert.

Das aktualisierte kinematische Modell beschreibt also eine aktuelle räumliche Lage des Anhängers relativ zum Zugfahrzeug sowie eine aktuelle Geometrie des Anhängers. Anhand dieses aktualisierten kinematischen Modells kann dann die Totwinkelregion des Anhängers bestimmt werden. Beispielsweise wird die Totwinkelregion als ein an das aktualisierte kinematische Modell angrenzender Bereich definiert. Durch das Bestimmen der aktuellen Lage sowie Geometrie des Anhängers anhand der Aktualisierung des kinematischen Modells mittels der Lidar-Sensordaten können eine Größe und eine Lage der Totwinkelregion relativ zum Anhänger bestimmt werden. Die Totwinkelregion wird also in Abhängigkeit von dem aktualisierten kinematischen Modell aktualisiert. Anders ausgedrückt wird die Totwinkelregion an das aktualisierte kinematische Modell des Anhängers angepasst. Somit kann die Totwinkelregion auch optimal an den tatsächlichen Anhänger angepasst werden. Dadurch kann in vorteilhafter Weise ein besonders zuverlässiges Totwinkelsystem realisiert werden, welches den Fahrer beispielsweise auf Objekte in der angepassten, aktualisierten Totwinkelregion warnen kann.

Besonders bevorzugt werden die vorstehend beschriebenen Schritte während jeweiliger Aktualisierungszyklen zum Aktualisieren der Totwinkelregion des Anhängers durchgeführt, wobei das während eines Aktualisierungszyklus aktualisierte kinematische Modell sowie die während eines Aktualisierungszyklus aktualisierte Totwinkelregion für einen darauffolgenden Aktualisierungszyklus zum erneuten Aktualisieren des kinematischen Modells sowie der Totwinkelregion vorgegeben werden. Die Rückgabe des aktualisierten kinematischen Modells sowie der aktualisierten Totwinkelregion an einen weiteren Aktualisierungszyklus entspricht einer Rückkopplung. Daraus ergibt sich der Vorteil, dass das kinematische Modell sowie die Totwinkelregion des Anhängers kontinuierlich in Abhängigkeit von den Lidar-Sensordaten aktualisiert werden können und zur Bestimmung eines neuen kinematischen Modells sowie einer neuen Totwinkelregion verwendet werden können. Eine an die aktuelle Lage sowie Geometrie des Anhängers angepasste Totwinkelregion kann somit kontinuierlich mit hoher Genauigkeit bestimmt werden.

Vorzugsweise wird anhand von Lidar-Sensordaten ein erstmaliges Vorhandensein des Anhängers am Zugfahrzeug erkannt, wobei in einem Initialisierungszyklus ein kinematisches Initialmodell des Anhängers anhand der mit dem Anhänger korrespondierenden Detektionspunkte bestimmt wird und eine Initialtotwinkelregion des Anhängers anhand des kinematischen Initialmodells bestimmt wird, und wobei die Initialtotwinkelregion und das kinematische Initialmodell für einen auf den Initialisierungszyklus folgenden Aktualisierungszyklus vorgegeben werden. Hier wird das Vorhandensein bzw. die Anwesenheit des Anhängers, welcher beispielsweise von dem Fahrer vor dem Starten des Zugfahrzeugs und damit vor dem Erfassen der Lidar-Sensordaten an das Zugfahrzeug angehängt wurde, erstmalig erfasst. In diesem Fall liegt insbesondere noch kein aktualisierbares kinematisches Modell des Anhängers vor.

Daher wird das kinematische Initialmodell in dem Initialisierungszyklus anhand der Detektionspunkte der Lidar-Sensordaten erstmalig erstellt. Dabei kann beispielsweise ein die mit dem Anhänger korrespondierenden Detektionspunkte umhüllender Rahmen bestimmt werden. Dazu können basierend auf den Positionswerten der Detektionspunkte diejenigen Detektionspunkte identifiziert werden, welche wahrscheinlich zu dem Anhänger gehören. Beispielsweise werden anhand der jeweiligen Positionswerte diejenigen Detektionspunkte identifiziert, welche sich in einem bestimmten Abstandsbereich hinter dem Zugfahrzeug befinden. Diese Detektionspunkte können geclustert bzw. gruppiert werden. Für das Cluster kann ein einhüllender Rahmen bzw. eine Einhüllende, beispielsweise mit einer rechteckigen Form, bestimmt werden. Dieser einhüllende Rahmen kann dann als kinematisches Initialmodell des Anhängers vorgegeben werden. Basierend auf diesem Initialmodell wird dann die Initialtotwinkelregion bestimmt. Das kinematische Initialmodell sowie die Initialtotwinkelregion werden für weitere Aktualisierungszyklen, in welchen die aktuelle Lage sowie die aktuelle Geometrie des Anhängers basierend auf dem kinematischen Modell des Anhängers bestimmt werden, vorgegeben.

In einer Weiterbildung der Erfindung wird anhand der mit dem Anhänger korrespondierenden Detektionspunkte der zumindest einen Modell-Unterregion zumindest eine Ausgleichslinie bestimmt, welche einen Wandbereich des Anhängers charakterisiert. Anhand der zumindest einen Ausgleichslinie wird zumindest ein Merkmal des Anhängers bestimmt und das kinematische Modell basierend auf einem Vergleich des zumindest einen Merkmals mit dem kinematischen Modell aktualisiert. Das zumindest eine Merkmal des Anhängers ist also insbesondere ein Abschnitt einer Kontur bzw. eines Umrisses des Anhängers. Dazu kann vorgesehen sein, dass als die zumindest eine Modell-Unterregion zumindest ein Modell-Bereich bestimmt wird, durch welchen eine eine Wand des Anhängers charakterisierende Kante des kinematischen Modells eingerahmt wird. Insbesondere werden eine Position des Modell-Bereiches und damit die einzurahmende Kante in Abhängigkeit von einem Anbringungsort der Lidar-Sensorvorrichtung am Zugfahrzeug bestimmt.

Der Anhänger kann beispielsweise eine rechteckförmige Kontur aufweisen und zwei gegenüberliegende, sich entlang einer Längsachse des Anhängers erstreckende Seitenwände, eine Vorderseite bzw. Vorderwand sowie eine Rückseite bzw. Rückwand aufweisen. In dem kinematischen Modell kann der Anhänger in Form von einem Rechteck dargestellt sein, wobei die Seitenwände, die Vorderwand und die Rückwand als jeweilige Kanten dargestellt sind. Durch die Modell-Unterregion wird nun insbesondere eine der Kanten eingerahmt. Der Modell-Bereich kann also die Kante selbst sowie an die Kante angrenzende Bereiche umfassen. Es können auch mehrere Modell-Unterregionen bestimmt werden, wobei jede Modell-Unterregion insbesondere durch einen, eine der Kanten einrahmenden Modell-Bereich ausgebildet ist. Dabei werden insbesondere diejenigen Kanten von den Modell-Bereichen eingerahmt, welche mit einer in dem Erfassungsbereich der Lidar-Sensorvorrichtung liegenden Wand des Anhängers korrespondieren. Bei einer in einem rechten Seitenspiegel des Zugfahrzeugs angeordneten Lidar-Sensorvorrichtung werden beispielsweise die vorderseitige Kante sowie eine rechte Seitenkante des Modells durch den Modell-Bereich eingerahmt.

Außerdem wird anhand der mit dem Anhänger korrespondierenden Detektionspunkte die Ausgleichslinie, beispielsweise durch Ausgleichsrechnung, insbesondere durch iteratives "Curve Fitting", bestimmt. Durch das iterative Anpassen der Ausgleichslinie, also das iterative "Curve fitting", können diejenigen Detektionspunkte innerhalb der Modell-Unterregion identifiziert werden, welche nicht mit der Ausgleichslinie konsistent sind bzw. nicht durch die Ausgleichslinie abgebildet werden können. Diese Detektionspunkte können als nicht zu dem Anhänger gehörig identifiziert und entfernt werden. Auch kann die Modell-Unterregion adaptiv vergrößert werden, beispielsweise anhand von Detektionspunkten, welche zwar außerhalb der vorbestimmten Modell-Unterregion liegen, jedoch konsistent mit der bestimmten Ausgleichslinie sind bzw. durch die Ausgleichslinie abgebildet werden.

Anhand der zumindest einen Ausgleichslinie, welche beispielsweise eine Wand des Anhängers repräsentiert, kann das zumindest eine Merkmal des Anhängers bestimmt werden. Insbesondere werden für zumindest zwei Modell-Unterregionen, beispielsweise für die die rechte Kante einrahmende Modell-Unterregion und für die die Vorderkante einrahmende Modell-Unterregion, die Ausgleichslinien bestimmt. Als das Merkmal des Anhängers kann somit eine L-förmige Linie bestimmt werden. Die L-förmige Linie repräsentiert beispielsweise einen Bereich der Vorderwand sowie die rechten Seitenwand des Anhängers. Dieses Merkmal wird nun mit dem kinematischen Modell verglichen. Bei einer Abweichung zwischen dem kinematischen Modell und dem zumindest einen Merkmal wird das kinematische Modell aktualisiert. Die Abweichung kann sich beispielsweise aus dem veränderten Anhängewinkel des Anhängers bezüglich des Zugfahrzeugs ergeben. Anhand der Abweichung kann somit beispielsweise der neue Anhängewinkel für das kinematische Modell bestimmt werden und in dem aktualisierten kinematischen Modell hinterlegt werden. Das kinematische Modell kann also in Abhängigkeit von der Abweichung zwischen dem nicht aktualisierten kinematischen Modell und dem zumindest einen Merkmal aktualisiert werden. Dabei wird das zumindest eine Merkmal insbesondere kontinuierlich anhand des aktualisierten kinematischen Modells aktualisiert.

Es erweist sich als vorteilhaft, wenn das kinematische Modell in Abhängigkeit von einem geometrischen Modell des Anhängers aufweisend zumindest einen geometrischen Parameter und in Abhängigkeit von zumindest einem kinematischen Parameter bestimmt wird. Zum Aktualisieren des kinematischen Modells wird insbesondere das geometrische Modell und/oder der zumindest eine kinematische Parameter basierend auf dem Vergleich zwischen den mit dem Anhänger korrespondierenden Detektionspunkte und dem kinematischen Modell aktualisiert. Durch den zumindest einen kinematischen Parameter in dem kinematischen Modell können eine aktuelle Lage sowie eine Bewegung des Anhängers bezüglich des Zugfahrzeugs beschrieben werden. Als der zumindest eine kinematische Parameter kann beispielsweise ein Anhängewinkel zwischen Anhänger und Zugfahrzeug und/oder eine Änderung des Anhängewinkels und/oder ein Achsabstand des Anhängers bestimmt und basierend auf dem Vergleich des zumindest einen Merkmals und dem kinematischen Modell aktualisiert werden. Zum Bestimmen des Anhängewinkels bzw. der Änderung des Anhängewinkels kann beispielsweise die Ausgleichslinie, welche den Wandbereich des Anhängers beschreibt, mit derjenigen Kante des kinematischen Modells verglichen werden, welche mit dem Wandbereich des Anhängers korrespondiert. Ein Winkel der Ausgleichslinie kann in das kinematische Modell eingegeben werden, welches daraufhin den Anhängewinkel sowie eine Änderungsrate des Anhängewinkels abschätzt. Eine Lage der Totwinkelregion relativ zum Zugfahrzeug bzw. relativ zum Anhänger kann an den aktuellen kinematischen Parameter, beispielsweise an den aktuellen Anhängewinkel, angepasst werden. Dies bedeutet beispielsweise, dass die Totwinkelregion gemeinsam mit dem Anhänger verschwenkbar ist.

Durch das geometrische Modell in dem kinematischen Modell können eine Form bzw. eine Geometrie sowie eine Bauweise des Anhängers beschrieben werden. Das geometrische Modell kann separat von dem zumindest einen kinematischen Parameter bestimmt und aktualisiert werden, beispielsweise mittels der Merkmalsextraktion des zumindest einen Merkmals des Anhängers anhand der Lidar-Sensordaten. Beispielsweise wird als der zumindest eine geometrische Parameter eine geometrische Abmessung des Anhängers und/oder eine Länge einer Anhängerkupplung und/oder eine Position zumindest eines Schwenkpunktes des Anhängers und/oder eine Art einer Koppeleinrichtung des Anhängers zum Anhängen an das Zugfahrzeug bestimmt basierend auf dem Vergleich des zumindest einen Merkmals und dem kinematischen Modell aktualisiert. Als die zumindest eine geometrische Abmessung kann beispielsweise eine Länge und/oder eine Breite des Anhängers bestimmt werden. Die Position des Schwenkpunktes kann als eine Position einer vorderen Ecke des Anhängers bestimmt werden. Diese Ecke kann beispielsweise anhand des zumindest einen Merkmals des Anhängers in Form von der L-förmigen Linie erkannt werden. Die Länge des Anhängers kann beispielsweise als eine Länge der die Seitenwand des Anhängers repräsentierenden Linie der L-förmigen Linie bestimmt werden. Die Breite des Anhängers kann basierend auf einer Länge der die Frontwand darstellenden Linie der L-Förmigen Linie bestimmt werden.

Außerdem kann die Art der Koppeleinrichtung des Anhängers bestimmt werden, über welche der Anhänger mit dem Zugfahrzeug gekoppelt wird. Insbesondere wird bestimmt, ob es sich bei der Koppeleinrichtung um einen Schwanenhals oder eine Zuggabel bzw. Koppelstange handelt. Wenn beispielsweise eine anhand des zumindest einen Merkmals bestimmte Breite des Anhängers unrealistisch ist, so kann davon ausgegangen werden, dass die Art der Koppeleinrichtung in dem aktuellen kinematischen Modell fehlerhaft ist. Das kinematische Modell wird dahingehend aktualisiert, dass die Art der Koppeleinrichtung in dem aktuellen kinematischen Modell auf die jeweils andere Art der Koppeleinrichtung, also beispielsweise von einer regulären Zuggabel zu dem Schwanenhals, geändert wird. Basierend auf dem aktualisierten geometrischen Modell und/oder dem zumindest einen aktualisierten kinematischen Parameter kann dann das kinematische Modell des Anhängers aktualisiert werden, sodass die Totwinkelregion des Anhängers aktualisiert werden kann. Beispielsweise können geometrische Abmessungen der Totwinkelregion in Abhängigkeit von dem aktualisierten geometrischen Modell des Anhängers bestimmt werden. Beispielseise kann eine Länge der Totwinkelregion in Abhängigkeit von der Länge des Anhängers bestimmt werden. Dazu kann die Länge der Totwinkelregion beispielsweise aus der Summe einer Längskante in dem kinematischen Modell, welche die Seitenwand des Anhängers repräsentiert, und einer Toleranzlänge bestimmt werden. Dies bedeutet, dass die Totwinkelregion über die Rückwand des Anhängers hinausragt. Der Fahrer wird somit beispielsweise auch dann gewarnt, wenn sich Objekte schräg hinter dem Anhänger befinden.

Es kann vorgesehen sein, dass das kinematische Modell zusätzlich in Abhängigkeit von Odometriedaten des Zugfahrzeugs, insbesondere einer Geschwindigkeit des Zugfahrzeugs und/oder einem Lenkwinkel des Zugfahrzeugs, bestimmt und aktualisiert wird. Beispielsweise kann durch die Odometriedaten eine durch eine Änderung des Lenkwinkels des Zugfahrzeugs resultierende Änderung des Anhängewinkels zwischen dem Zugfahrzeug und dem Anhänger bestimmt werden und zur Aktualisierung des kinematischen Modells verwendet werden. Anhand der Odometriedaten können die von der Lidar-Sensorvorrichtung erfassen Daten in vorteilhafter Weise verifiziert bzw. überprüft werden. Das kinematische Modell und damit die Totwinkelregion des Anhängers werden insbesondere nur basierend auf den Lidar-Sensordaten und den Odometriedaten aktualisiert. Es sind also zur Aktualisierung insbesondere keine weiteren Sensordaten und insbesondere auch keine Kommunikation mit dem Anhänger nötig. Die Aktualisierung des kinematischen Modells des Anhängers basierend auf Odometriedaten ist insbesondere dann besonders vorteilhaft, wenn die Lidar-Sensordaten keine mit dem Anhänger korrespondierenden Detektionspunkte aufweisen oder die Lidar-Sensordaten zu verrauscht sind.

In einer Weiterbildung der Erfindung wird zusätzliche eine Totwinkelregion des Zugfahrzeugs in Abhängigkeit von dem aktualisierten kinematischen Modell des Anhängers bestimmt und/oder eine kombinierte Totwinkelregion des Gespanns aufweisend die Totwinkelregion des Anhängers und eine Totwinkelregion des Zugfahrzeugs in Abhängigkeit von dem aktualisierten kinematischen Modell des Anhängers bestimmt. Beispielsweise kann eine Lage, insbesondere ein lateraler Abstand der Totwinkelregion des Zugfahrzeugs zu dem Zugfahrzeug, in Abhängigkeit von einer in dem kinematischen Modell hinterlegten geometrischen Abmessung des Anhängers, beispielsweise einer Breite des Anhängers, bestimmt werden. Dabei kann vorgesehen sein, dass nur die Totwinkelregion des Zugfahrzeugs vorgegeben wird, wenn anhand der Lidar-Sensordaten erfasst wird, dass kein Anhänger an das Zugfahrzeug angekoppelt ist. Sobald ein Anhänger an das Zugfahrzeug angekoppelt ist, kann zusätzlich zu der Totwinkelregion des Zugfahrzeugs die Totwinkelregion des Anhängers bestimmt und kontinuierlich aktualisiert werden. Auch können die Totwinkelregionen des Zugfahrzeugs sowie des Anhängers zu einer gemeinsamen Totwinkelregion des Gespanns kombiniert werden. Das Totwinkelsystem wird somit an die aktuelle Konfiguration des Gespanns, welches entweder das Zugfahrzeug alleine oder das Zugfahrzeug mit dem angekoppelten Anhänger umfasst, angepasst.

Besonders bevorzugt werden in den Lidar-Sensordaten zusätzlich mit einem Freiraum in dem Umgebungsbereich korrespondierende Detektionspunkte basierend auf dem kinematischen Modell des Anhänger identifiziert, anhand der mit dem Freiraum korrespondierenden Detektionspunkten Objekte in dem Umgebungsbereich identifiziert und überprüft, ob sich die Objekte in der anhand des aktualisierten kinematischen Modells bestimmten, aktualisierten Totwinkelregion des Anhängers befinden. Es werden also die dem Anhänger korrespondierenden Detektionspunkte in den Lidar-Sensordaten von den mit dem Freiraum korrespondierenden Detektionspunkten separiert. Beispielsweise können alle Detektionspunkte, welche außerhalb der anhand des kinematischen Modells bestimmten Modell-Unterregionen liegen, als mit dem Freiraum korrespondierende Detektionspunkte klassifiziert werden. Anhand dieser mit dem Freiraum korrespondierenden Detektionspunkte können die Objekte, beispielsweise andere Fahrzeuge in dem Umgebungsbereich des Gespanns bestimmt werden. Anhand der Positionswerte der zu den Objekten gehörigen Detektionspunkte kann die räumliche Lage der Objekte relativ zu der aktualisierten Totwinkelregion des Anhängers bestimmt werden. Dadurch kann überprüft werden, ob sich die Objekte in der aktualisierten Totwinkelregion befinden, und falls ja, ein Warnsignal an den Fahrer des Gespanns ausgegeben werden.

In einer besonders vorteilhaften Weiterbildung der Erfindung werden Intensitätswerte der mit dem Freiraum korrespondierenden Detektionspunkte bestimmt, die Detektionspunkte durch Vergleichen der Intensitätswerte mit einem abstandsbasierten Intensitäts-Schwellwert gefiltert, die gefilterten, mit dem Freiraum korrespondierenden Detektionspunkte zu Clustern gruppiert und die Objekte basierend auf den Clustern erkannt. Die jeweiligen Detektionspunkte innerhalb eines Clusters werden durch Vergleichen der Intensitätswerte der Detektionspunkte innerhalb des Clusters mit einem clusterspezifischen, relativen Intensitäts-Schwellwert gefiltert, wobei der clusterspezifische, relative Intensitäts-Schwellwert in Abhängigkeit von den Intensitätswerten der Detektionspunkte des Clusters bestimmt wird.

Die mit dem Freiraum korrespondierenden Detektionspunkte werden zunächst basierend auf ihrer absoluten Intensität gefiltert. Dazu können die Intensitätswerte zumindest einiger Detektionspunkte, insbesondere jedes Detektionspunktes, mit dem vorbestimmten abstandsbasierten Intensitäts-Schwellwert verglichen werden. Der abstandsbasierte Intensitäts-Schwellwert ist somit ein in Abhängigkeit von dem Abstand veränderlicher Intensitäts-Schwellwert, welcher mit sämtlichen Detektionspunkten innerhalb eines bestimmten Abstandsbereiches verglichen wird. Die Detektionspunkte innerhalb eines Abstandsbereiches werden also mit dem zugeordneten Intensitäts-Schwellwert verglichen und somit innerhalb des Abstandsbereiches basierend auf ihrer absoluten Intensität gefiltert. Dabei werden alle Detektionspunkte herausgefiltert bzw. entfernt, deren Intensitätswert unterhalb des abstandsbasierten Intensitäts-Schwellwertes liegt. Der abstandsbasierte Intensität-Schwellwert ist dabei insbesondere so vorbestimmt, dass Störsignale, beispielsweise ein Sensorrauschen oder unerwünschte Detektionen, unterdrückt werden können. Als unerwünschte Detektionen werden diejenigen Detektionspunkte herausgefiltert, welche zu unerwünschten Reflexionen in dem Umgebungsbereich korrespondieren. Solche unerwünschten Reflexionen können beispielsweise von Spritzwasser oder Wasserdampf verursacht werden. Ein minimaler Intensitätswert, welcher für die Detektionspunkte zum Verhindern eines Herausfilterns gefordert wird, kann über eine Kurve beschrieben werden, bei welcher der abstandsbasierte Intensitäts-Schwellwert mit steigender Distanz eines Detektionspunktes sinkt. Anders ausgedrückt, ist der abstandsbasierte Intensitäts-Schwellwert umso höher, je niedriger die Distanz ist. Je näher ein Detektionspunkt ist, desto höher muss also sein Intensitätswert sein, um nicht herausgefiltert zu werden.

Anschließend werden die Detektionspunkte zu Clustern bzw. Punktwolken gruppiert. Als ein Cluster wird dabei eine Ansammlung von Detektionspunkten interpretiert, deren zugehörige Reflexionspunkte von demselben Objekt in dem Umgebungsbereich stammen. Anders ausgedrückt wird davon ausgegangen, dass jedes Cluster ein Objekt in dem Umgebungsbereich repräsentiert. Beispielsweise können die Detektionspunkte durch dichtebasierte räumliche Clusteranalyse, insbesondere durch DBSCAN ("Density-Based Spatial Clustering of Applications with Noise") zu den Clustern gruppiert werden.

Nach der Gruppierung der Detektionspunkte zu Clustern werden die Detektionspunkte innerhalb eines Clusters, also die Clusterkandidaten, basierend auf ihrer relativen Intensität gefiltert. Dazu werden die Intensitätswerte der einzelnen Clusterkandidaten mit dem clusterspezifischen, relativen Intensitäts-Schwellwert verglichen. Als der clusterspezifische, relative Intensitäts-Schwellwert kann beispielsweise ein gewichteter Mittelwert der Intensitätswerte der jeweiligen Detektionspunkte innerhalb eines Clusters vorgegeben werden, wobei ein konfigurierbarer Parameter zwischen 0 und 1 zum Gewichten des Mittelwertes vorgegeben werden kann. Der clusterspezifische, relative Intensität-Schwellwert wird also aus der gewichteten mittleren Intensität zumindest einiger, insbesondere aller, Detektionspunkte innerhalb des Clusters bestimmt. Dann wird insbesondere jeder Detektionspunkt innerhalb des Clusters mit der gewichteten mittleren Intensität verglichen und herausgefiltert, falls dessen Intensitätswert geringer als der gewichtete Mittelwert ist. Auch kann vorgesehen sein, dass die mit dem Anhänger korrespondierenden Detektionspunkte vor der Bestimmung des zumindest einen Merkmals des Anhängers, beispielsweise vor Bestimmung der Ausgleichslinie, basierend auf ihren absoluten und ihren relativen Intensitäten gefiltert werden.

Durch das Filtern der Detektionspunkte innerhalb eines Clusters können in dem Cluster Detektionspunkte eliminiert werden, deren Intensitätswerte, beispielsweise aufgrund eines Übersprechens von benachbarten Detektionspunkten mit einem hohen Intensitätswert des reflektierten Lichts, fehlerhaft sind. Basierend auf den gefilterten Clustern können dann die Objekte korrekt erkannt werden sowie insbesondere eine Größe und eine Form der Objekte mit einer hohen Genauigkeit bestimmt werden.

Vorzugsweise wird anhand der Lidar-Sensordaten eine räumliche Lage der identifizierten Objekte zu dem aktualisierten kinematischen Modell des Anhängers bestimmt und eine Anwesenheit eines Objektes in der Totwinkelregion erkannt, falls ein Überlappungsbereich zwischen dem Objekt und der aktualisierten Totwinkelregion einen vorbestimmten Schwellwert für den Überlappungsbereich überschreitet, wobei bei Anwesenheit eines Objektes in der aktualisierten Totwinkelregion des Anhängers ein Warnsignal generiert wird. Insbesondere wird eine Zeitdauer der Anwesenheit des Objektes in der Totwinkelregion erfasst und das Warnsignal nur generiert, falls die Zeitdauer einen vorbestimmten Schwellwert für die Zeitdauer überschreitet. Der Schwellwert für den Überlappungsbereich kann beispielsweise 60 % betragen. Der Schwellwert für die Zeitdauer kann beispielsweise 250 ms betragen. Als die räumliche Lage des Objektes zu dem Anhänger können beispielsweise ein lateraler sowie ein longitudinaler Abstand des jeweiligen Objektes von dem Anhänger, beispielsweise einer rechten hinteren Ecke des Anhängers, bestimmt werden. Anhand dieser Abstandsfläche des Objektes zu dem Anhänger kann dann bestimmt werden, ob und zu welchem Anteil sich der Anhänger in der Totwinkelregion befindet.

Wenn sich das Objekt also mindestens über die vorbestimmte Zeitdauer überwiegend in der Totwinkelregion, beispielsweise der Totwinkelregion des Anhängers oder der Totwinkelregion des Zugfahrzeugs oder der Totwinkelregion des Gespanns, befindet so wird ein Totwinkelmarker gesetzt. Basierend auf diesem Totwinkelmarker wird das Warnsignal generiert. Das Warnsignal kann beispielsweise ein akustisches Warnsignal in Form von einem Warnton sein. Auch kann vorgesehen sein, dass das Warnsignal ein visuelles Warnsignal ist, welches auf einer fahrzeugseitigen Anzeigeeinrichtung, beispielsweise auf einem Bildschirm in einer Fahrgastzelle des Zugfahrzeugs, angezeigt wird.

Es erweist sich als vorteilhaft, wenn, im Falle, dass eine Totwinkelregion für den Anhänger, eine Totwinkelregion für das Zugfahrzeug und eine Totwinkelregion für das Gespann bestimmt werden, für jede Totwinkelregion ein spezifisches Warnsignal generiert wird. Anders ausgedrückt wird für jede Totwinkelregion ein der Totwinkelmarker bestimmt. Wenn anhand eines der Totwinkelmarker erkannt wird, dass sich ein Objekt in der mit dem Totwinkelmarker korrespondierenden Totwinkelregion befindet, so kann ein regionsspezifisches Warnsignal generiert werden. Beispielsweise können die Totwinkelregionen auf der fahrzeugseitigen Anzeigeeinrichtung angezeigt werden, wobei diejenige Totwinkelregion hervorgehoben, beispielsweise eingefärbt, wird, in welcher sich das Objekt befindet. Anhand des religionsspezifischen Warnsignals kann der Fahrer des Gespanns in vorteilhafter Weise besonders schnell erkennen, wo sich das Objekt in dem Umgebungsbereich des Gespanns befindet.

Die Erfindung betrifft außerdem ein Totwinkelsystem für ein durch ein Zugfahrzeug und einen Anhänger gebildetes Gespann, aufweisend zumindest eine Lidar-Sensorvorrichtung zum Anordnen an dem Zugfahrzeug und zum Erfassen von Lidar-Sensordaten aus einem Umgebungsbereich des Gespanns, und eine Steuereinrichtung, welche dazu ausgelegt ist, ein erfindungsgemäßes Verfahren oder eine vorteilhafte Ausführungsform davon durchzuführen. Das Totwinkelsystem ist insbesondere dazu ausgelegt, den Fahrer zu warnen, falls sich Objekte im toten Winkel des Gespanns befinden und dadurch, beispielsweise bei einem Spurwechsel oder beim Abbiegen, eine Gefahr für den Fahrer oder das Objekt droht. Zur Ausgabe eines Warnsignals kann das Fahrerassistenzsystem eine Ausgabeeinrichtungen, beispielsweise einen Bildschirm oder einen Lautsprecher, aufweisen.

Ein erfindungsgemäßes Gespann umfasst ein Zugfahrzeug, einen an das Zugfahrzeug angekoppelten Anhänger sowie ein erfindungsgemäßes Totwinkelsystem. Das Zugfahrzeug kann beispielsweise als ein Kraftfahrzeug, ein Lkw oder ein Motorrad ausgebildet sein. Das Zugfahrzeug kann beispielsweise eine Anhängerkupplung zum Anhängen des Anhängers über eine Zuggabel bzw. eine Koppelstange aufweisen. Auch kann das Zugfahrzeug beispielsweise eine Ladefläche aufweisen, über welche der Anhänger mittels eines sogenannten Schwanenhalses ankoppelbar ist. Außerdem weist das Zugfahrzeug zumindest eine Lidar-Sensorvorrichtung auf, welche insbesondere an einem Seitenbereich, beispielsweise einem Seitenspiegel, angeordnet ist

Die mit Bezug auf das erfindungsgemäße Verfahren vorgestellten bevorzugten Ausführungsformen und deren Vorteile gelten entsprechend für das erfindungsgemäße Totwinkelsystem sowie für das erfindungsgemäße Gespann.

Mit Angaben "links", "rechts", "vorne", "hinten", etc. sind Positionen und Orientierungen aus Sicht eines in Fahrzeuglängsrichtung des Zugfahrzeugs blickenden Beobachters angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Gespanns aufweisend ein Kraftfahrzeug und einen Anhänger;
- Fig. 2: eine schematische Darstellung eines Ablaufplans einer Ausführungsform eines erfindungsgemäßen Verfahrens;
- Fig. 3: eine schematische Darstellung eines kinematischen Modells des Anhängers mit einer Totwinkelregion;
- Fig. 4: eine schematische Darstellung eines kinematischen Modell des Anhängers mit einem Objekt; und
- Fig. 5: eine schematische Darstellung eines Modells des Kraftfahrzeugs mit einer Totwinkelregion.

In den Figuren sind gleiche sowie funktionsgleiche Elemente mit den gleichen Bezugszeichen versehen.

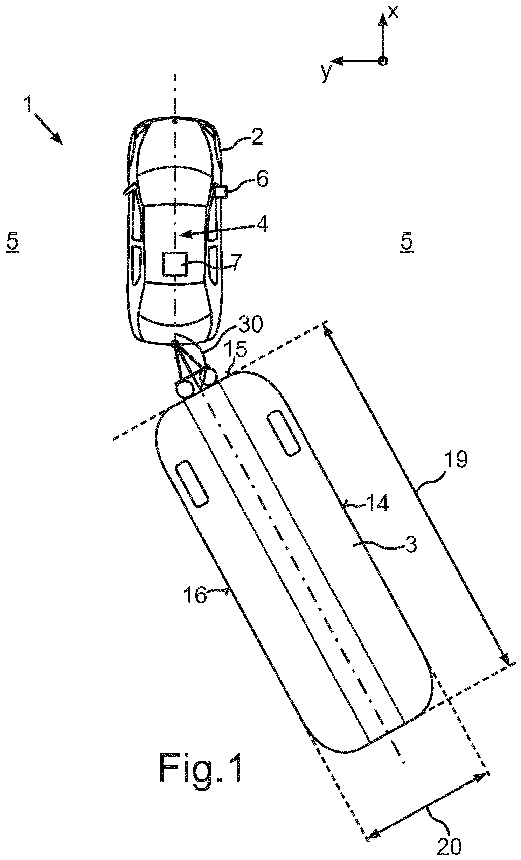

Fig. 1 zeigt ein Gespann 1 gemäß der vorliegenden Erfindung in einer Draufsicht. Das Gespann 1 wird gebildet aus einem Zugfahrzeug 2 sowie einem an das Zugfahrzeug 2 angehängten Anhänger 3. Hier ist das Zugfahrzeug 2 als ein Kraftfahrzeug in Form von einem Personenkraftwagen ausgebildet. Der Anhänger 3 kann beispielsweise ein Wohnanhänger oder ein Pferdeanhänger sein. Das Gespann 1 umfasst ein Totwinkelsystem 4, welches dazu ausgelegt ist, einen Fahrer des Gespanns 1 beim Rangieren bzw. Manövrieren mit dem Gespann 1 zu unterstützen. Dazu kann das Totwinkelsystem 4 den Fahrer beispielsweise warnen, falls sich ein Objekt in einem toten Winkel im Umgebungsbereich 5 des Gespanns 1 befindet.

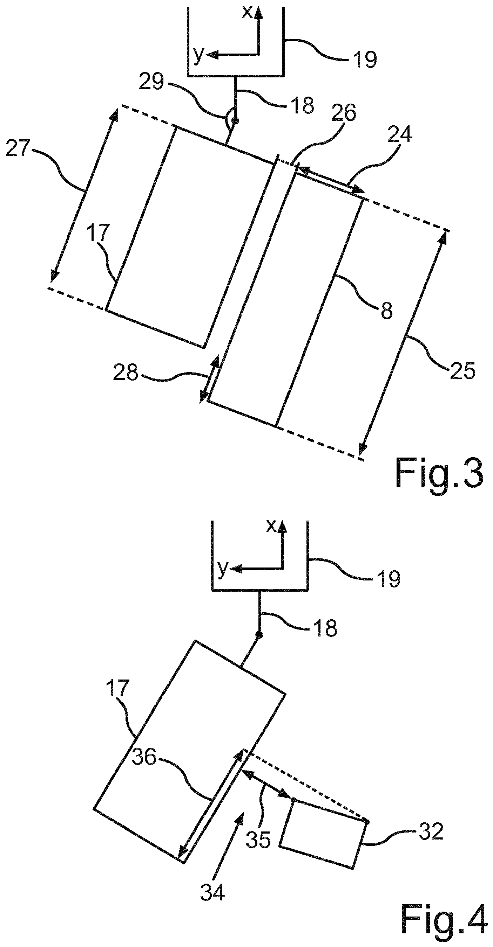

Zum Überwachen des Umgebungsbereiches 5 weist das Totwinkelsystem 4 eine Lidar-Sensorvorrichtung 6 auf, welche hier an einem rechten Seitenspiegels des Zugfahrzeugs 2 angeordnet ist und deren Blickrichtung nach hinten (negative y-Richtung) in Richtung des Anhängers 3 gerichtet ist. Somit befindet sich der Anhänger 3 zumindest bereichsweise in einem Erfassungsbereich der Lidar-Sensorvorrichtung 6. Die von der Lidar-Sensorvorrichtung 6 aus dem Umgebungsbereich 5 des Gespanns 1 erfassten Lidar-Sensordaten können einer Steuereinrichtung 7 des Totwinkelsystems 4 übermittelt werden. Die Steuereinrichtung 7 kann basierend auf den Lidar-Sensordaten eine Totwinkelregion 8 für den Anhänger 3 bestimmen, welche beispielhaft in Fig. 3 gezeigt ist.

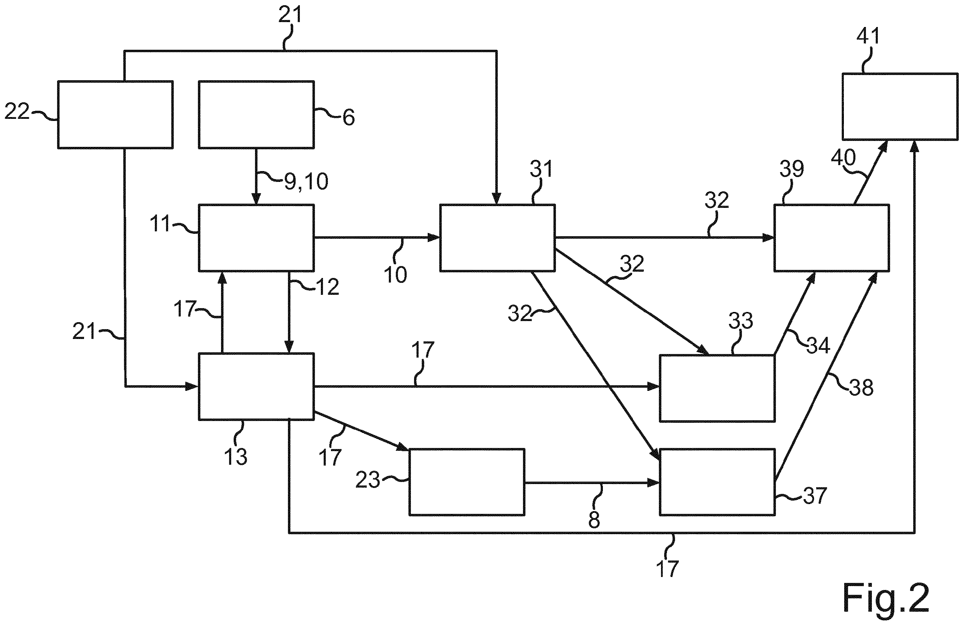

Ein Ablaufplan zum Bestimmen der Totwinkelregion 8 ist anhand von Fig. 2 dargestellt. Dazu werden in den aus dem Umgebungsbereich 5 des Gespanns 1 erfassten Lidar-Sensordaten der Lidar-Sensorvorrichtung 6 Detektionspunkte 9, 10 identifiziert, welche einem Anhängermerkmalsextrahierer 11 zugeführt werden. Der Anhängermerkmalsextrahierer 11 separiert diejenigen mit einem Freiraum in dem Umgebungsbereich 5 korrespondierenden Detektionspunkte 10 von den mit dem Anhänger 3 korrespondierenden Detektionspunkten 9. Basierend auf den mit dem Anhänger 3 korrespondierenden Detektionspunkten 9 kann durch den Anhängermerkmalsextrahierer 11 zumindest ein Merkmal 12 des Anhängers 3 bestimmt werden und einem Anhängerschätzer 13 zugeführt werden. Das zumindest eine Merkmal 12 des Anhängers 3 repräsentiert beispielsweise Bereiche von Wänden 14, 15, 16 (siehe Fig. 1) des Anhängers 3. Basierend auf dem zumindest einen Merkmal 12 des Anhängers 3 erstellt der Anhängerschätzer 13 ein kinematisches Modell 17 des Anhängers 3, welches eine aktuelle Lage des Anhängers 3 zu dem Zugfahrzeug 2 sowie eine Geometrie des Anhängers 3, beispielsweise eine Länge 19 sowie eine Breite 20 des Anhängers 3 (siehe Fig. 1), beschreibt. Ein solches kinematisches Modell 17 des Anhängers 3 ist beispielhaft in Fig. 3 und Fig. 4 dargestellt. Das in Fig. 3 und 4 gezeigte kinematische Modell 17 des Anhängers 3 ist über eine Anhängerkupplung 18 an ein Modell 19 des Zugfahrzeugs 2 angekoppelt.

Das von dem Anhängerschätzer 13 bestimmte kinematische Modell 17 des Anhängers 3 wird dem Anhängermerkmalsextrahierer 11 zurückgegeben, welcher basierend auf dem kinematischen Modell 17 des Anhängers 3 das Merkmal 12 des Anhängers 3 aktualisiert. Dieses aktualisierte Merkmal 12 wird wiederum dem Anhängerschätzer 13 zugeführt, welcher basierend darauf das kinematische Modell 17 des Anhängers 3 aktualisiert, usw. Zwischen dem Anhängerschätzer 13 und dem Anhängermerkmalsextrahierer 11 besteht also eine Rückkopplung. Zum Aktualisieren des kinematischen Modells 17 des Anhängers 3 können außerdem Odometriedaten 21 eines Odometers 22 des Zugfahrzeugs 2 verwendet werden. Solche Odometriedaten 21 können beispielsweise eine aktuelle Geschwindigkeit des Zugfahrzeugs 2 sowie ein aktueller Lenkwinkel des Zugfahrzeugs 2 sein. Das aktualisierte kinematische Modell 17 wird außerdem einem Totwinkelregionsbestimmer 23 zugeführt, welche basierend auf dem aktualisierten kinematischen Modell 17 die Totwinkelregion 8 des Anhängers 3 erstellt. Dabei wird eine Breite 24 sowie eine Länge 25 der Totwinkelregion 8 basierend auf dem kinematischen Modell 17 des Anhängers 3 erstellt. Auch ein Abstand 26 der Totwinkelregion 8 zu dem Anhänger 3 wird anhand des kinematischen Modells 17 bestimmt. Beispielsweise kann die Länge 25 der Totwinkelregion 8 als die Summe einer Länge 27 des kinematischen Modells 17, welche die Länge 19 des Anhängers 3 repräsentiert, sowie einer Toleranzlänge 28 bestimmt werden. Eine Lage der Totwinkelregion 8 kann beispielsweise in Abhängigkeit von einem Winkel 29 des kinematischen Modells 17, welcher einen Anhängewinkel 30 des Anhängers 3 bezüglich des Zugfahrzeugs 2 beschreibt, bestimmt werden.

Außerdem werden die zu dem Freiraum korrespondierenden Detektionspunkte 10 einem Objektverfolger 31 zugeführt. Dem Objektverfolger 31 können außerdem die Odometriedaten 21 des Odometers 22 bereitgestellt werden. Der Objektverfolger 31 erkennt und verfolgt anhand der zu dem Freiraum korrespondierenden Detektionspunkten 10 Objekte 32 in dem Umgebungsbereich 5 des Gespanns 1. Beispielsweise können die mit dem Freiraum korrespondierenden Detektionspunkte 10 zu Clustern gruppiert werden, wobei jedes Cluster ein Objekt 32 repräsentiert. Die verfolgten Objekte 32 sowie das aktualisierte kinematische Modell 17 des Anhängers 3 können einem Abstandsraumbestimmer 33 zugeführt werden. Der Abstandsraumbestimmer 33 bestimmt einen Abstandsraum bzw. eine räumliche Lage 34 der Objekte 32 zu dem kinematischen Modell 17 des Anhängers 3. Zur Bestimmung der räumlichen Lage 34 werden beispielsweise, wie in Fig. 4 gezeigt, ein lateraler Abstand 35 sowie ein longitudinaler Abstand 36 des Objektes 32 zu dem kinematischen Modell 17 des Anhängers 3 bestimmt.

Darüber hinaus werden die verfolgten Objekte 32 einem Totwinkelmarkerbestimmer 37 zugeführt, welcher anhand von der bestimmten Totwinkelregion 8 sowie dem Objekt 32 einen Totwinkelmarker 38 erstellt. Der Totwinkelmarkerbestimmer 37 überprüft anhand des Objektes 32 sowie der Lage 34 des Objektes 32, ob sich das Objekt 32 in der Totwinkelregion 8 befindet. Ein Totwinkelobjektbestimmer 39 kann die verfolgten Objekte 32 um jeweilige Totwinkelmarker 38 sowie um Lageinformationen der Objekte 32 zu dem Gespann 1 erweitern. Wenn beispielsweise erfasst wurde, dass sich ein vorbestimmter Mindestanteil des Objektes 32, beispielsweise 60 %, über einen vorbestimmten Mindestzeitraum, beispielsweise 250 ms, in der Totwinkelregion 8 befindet, so wird das Objekt 32 mit dem Totwinkelmarker 38 markiert und als ein sogenanntes Totwinkelobjekt 40 definiert. Das Totwinkelobjekt 40 sowie das kinematische Modell 17 des Anhängers 3 können einer Ausgabeeinrichtung 41 zugeführt werden, welche daraufhin ein Warnsignal, beispielsweise einen Warnton oder ein visuelles Warnsymbol, generiert.

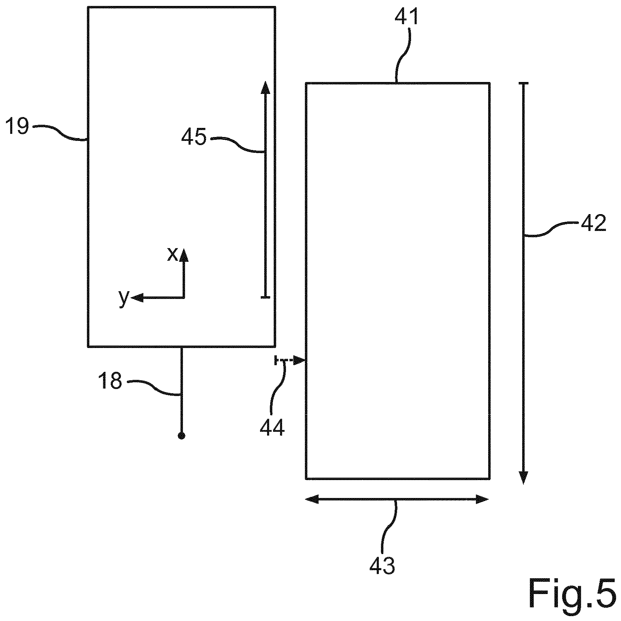

In Fig. 5 ist das Modell 19 des Zugfahrzeugs 2 gezeigt, für welches ebenfalls eine Totwinkelregion 41 bestimmt wird. Die Totwinkelregion 41 des Zugfahrzeugs 2 weist eine Länge 42 sowie eine breite 43 auf, welche beispielsweise anhand des kinematischen Modells 17 des Anhängers 3 bestimmt werden kann. Auch ein lateraler Versatz 44 sowie ein longitudinaler Versatz 45 der Totwinkelregion 41 bezüglich des Modells 19 des Zugfahrzeugs 2 können in Abhängigkeit von dem kinematischen Modell 17 des Anhängers 3 bestimmt werden. Wenn sich nun ein Objekt 32 in einer der Totwinkelregionen 8, 41, also in der Totwinkelregion 8 des Anhängers 3 oder in der Totwinkelregion 41 des Zugfahrzeugs 2 befindet, so kann ein spezifisches Warnsignal generiert werden, welches dem Fahrer des Gespanns 1 zusätzlich darauf hinweist, in welcher der Totwinkelregionen 8, 41 sich das Objekt 32 befindet. Auch kann anhand der Totwinkelregion 41 des Zugfahrzeugs 2 sowie anhand der Totwinkelregionen 8 des Anhängers 3 eine kombinierte Totwinkelregion für das Gespann 1 definiert werden.

## Patentansprüche

1. Verfahren zum Unterstützen eines Fahrers eines durch ein Zugfahrzeug (2) und einen Anhänger (3) gebildeten Gespanns (1) beim Manövrieren mit dem Gespann (1), bei welchem Lidar-Sensordaten einer Lidar-Sensorvorrichtung (6) des Zugfahrzeugs (2) aus einem Umgebungsbereich (5) des Gespanns (1) empfangen werden, mit dem Anhänger (3) korrespondierende Detektionspunkte (9) in den Lidar-Sensordaten identifiziert werden und in Abhängigkeit von den mit dem Anhänger (3) korrespondierenden Detektionspunkten (9) eine Totwinkelregion (8) für den Anhänger (3) definiert wird,
**dadurch gekennzeichnet, dass**
ein den Anhänger (3) beschreibendes kinematisches Modell (17) vorgegeben wird, zumindest eine mit dem kinematischen Modell (17) zumindest bereichsweise überlappende Modell-Unterregion bestimmt wird, die innerhalb der Modell-Unterregion liegenden Detektionspunkte (9) als mit dem Anhänger (3) korrespondierende Detektionspunkte (9) klassifiziert werden, das kinematische Modell (17) des Anhängers (3) basierend auf den mit dem Anhänger (3) korrespondierenden Detektionspunkten (9) aktualisiert wird und die Totwinkelregion (8) für den Anhänger (3) in Abhängigkeit von dem aktualisierten kinematischen Modell (17) des Anhängers (3) aktualisiert wird.

2. Verfahren nach Anspruch 1,
**dadurch gekennzeichnet, dass**
das kinematische Modell (17) des Anhängers (3) sowie die Totwinkelregion (8) während jeweiliger Aktualisierungszyklus aktualisiert werden, wobei das während eines Aktualisierungszyklus aktualisierte kinematische Modell (17) sowie die während eines Aktualisierungszyklus aktualisierte Totwinkelregion (8) für einen darauffolgenden Aktualisierungszyklus zum erneuten Aktualisieren des kinematischen Modells (17) sowie der Totwinkelregion (8) vorgegeben werden.

3. Verfahren nach Anspruch 1 oder 2,
**dadurch gekennzeichnet, dass**
anhand von Lidar-Sensordaten ein erstmaliges Vorhandensein des Anhängers (3) am Zugfahrzeug (2) erkannt wird, wobei in einem Initialisierungszyklus ein kinematisches Initialmodell des Anhängers (3) anhand der mit dem Anhänger (3) korrespondierenden Detektionspunkte (9) bestimmt wird und eine Initialtotwinkelregion des Anhängers (3) anhand des kinematischen Initialmodells bestimmt wird, und wobei die Initialtotwinkelregion und das kinematische Initialmodell für einen auf den Initialisierungszyklus folgenden Aktualisierungszyklus vorgegeben werden.

4. Verfahren nach einem der vorhergehenden Ansprüche,
**dadurch gekennzeichnet, dass**
anhand der mit dem Anhänger (3) korrespondierenden Detektionspunkte (9) der zumindest einen Modell-Unterregion zumindest eine Ausgleichslinie bestimmt wird, welche einen Wandbereich des Anhängers (3) charakterisiert, anhand der zumindest einen Ausgleichslinie zumindest ein Merkmal (12) des Anhängers (3) bestimmt wird und das kinematische Modell (17) basierend auf einem Vergleich des zumindest einen Merkmals (12) mit dem kinematischen Modell (17) aktualisiert wird.

5. Verfahren nach einem der vorhergehenden Ansprüche,
**dadurch gekennzeichnet, dass**
das kinematische Modell (17) in Abhängigkeit von einem geometrischen Modell des Anhängers (3) aufweisend zumindest einen geometrischen Parameter und in Abhängigkeit von zumindest einem kinematischen Parameter bestimmt wird, und zum Aktualisieren des kinematischen Modells (17) das geometrische Modell und/oder der zumindest eine kinematische Parameter basierend auf dem Vergleich zwischen der mit dem Anhänger (3) korrespondierenden Detektionspunkte (9) und dem kinematischen Modell (17) aktualisiert wird.

6. Verfahren nach einem der vorhergehenden Ansprüche,
**dadurch gekennzeichnet, dass**
das kinematische Modell (17) zusätzlich in Abhängigkeit von Odometriedaten (21) des Zugfahrzeugs (2), insbesondere einer Geschwindigkeit des Zugfahrzeugs (2) und/oder einem Lenkwinkel des Zugfahrzeugs (2), bestimmt und aktualisiert wird.

7. Verfahren nach einem der vorhergehenden Ansprüche,
**dadurch gekennzeichnet, dass**
eine Totwinkelregion (41) des Zugfahrzeugs (2) in Abhängigkeit von dem aktualisierten kinematischen Modell (17) des Anhängers (3) bestimmt wird und/oder eine kombinierte Totwinkelregion des Gespanns (1) aufweisend die Totwinkelregion (8) des Anhängers (3) und eine Totwinkelregion (41) des Zugfahrzeugs (2) in Abhängigkeit von dem aktualisierten kinematischen Modell (17) des Anhängers (3) bestimmt wird.

8. Verfahren nach einem der vorhergehenden Ansprüche,
**dadurch gekennzeichnet, dass**
in den Lidar-Sensordaten zusätzlich mit einem Freiraum in dem Umgebungsbereich (5) korrespondierende Detektionspunkte (10) basierend auf dem kinematischen Modell (10) des Anhängers (3) identifiziert werden, anhand der mit dem Freiraum korrespondierenden Detektionspunkten (10) Objekte (32) in dem Umgebungsbereich (5) identifiziert werden und überprüft wird, ob sich die Objekte (32) in der anhand des aktualisierten kinematischen Modells (17) bestimmten, aktualisierten Totwinkelregion (8) des Anhängers (3) befinden.

9. Verfahren nach Anspruch 8,
**dadurch gekennzeichnet, dass**
Intensitätswerte der mit dem Freiraum korrespondierenden Detektionspunkte (10) bestimmt werden, die Detektionspunkte (10) durch Vergleichen der Intensitätswerte mit einem abstandsbasierten Intensitäts-Schwellwert gefiltert werden, die gefilterten, mit dem Freiraum korrespondierenden Detektionspunkte (10) zu Clustern gruppiert werden, und die Objekte (32) basierend auf den Clustern erkannt werden, wobei die jeweiligen Detektionspunkte (10) innerhalb eines Clusters durch Vergleichen der Intensitätswerte der Detektionspunkte (10) innerhalb des Clusters mit einem clusterspezifischen, relativen Intensitäts-Schwellwert gefiltert werden, wobei der clusterspezifische, relative Intensitäts-Schwellwert in Abhängigkeit von den Intensitätswerten der Detektionspunkte (10) des Clusters bestimmt wird.

10. Verfahren nach Anspruch 8 oder 9,
**dadurch gekennzeichnet, dass**
anhand der Lidar-Sensordaten eine räumliche Lage (34) der identifizierten Objekte (32) zu dem kinematischen Modell (17) des Anhängers (3) bestimmt wird und eine Anwesenheit eines Objektes (32) in der Totwinkelregion (8) erkannt wird, falls ein Überlappungsbereich zwischen dem Objekt (32) und der Totwinkelregion (8) einen vorbestimmten Schwellwert für den Überlappungsbereich überschreitet, wobei bei Anwesenheit eines Objektes (32) in der Totwinkelregion (8) des Anhängers (3) ein Warnsignal generiert wird.

11. Verfahren nach Anspruch 10,
**dadurch gekennzeichnet, dass**
eine Zeitdauer der Anwesenheit des Objektes (32) in der Totwinkelregion (8) erfasst wird und das Warnsignal nur generiert wird, falls die Zeitdauer einen vorbestimmten Schwellwert für die Zeitdauer überschreitet.

12. Verfahren nach Anspruch 10 oder 11,
**dadurch gekennzeichnet, dass**
im Falle, dass eine Totwinkelregion (8) für den Anhänger (3), eine Totwinkelregion (41) für das Zugfahrzeug (2) und eine Totwinkelregion für das Gespann (1) definiert werden, für jede Totwinkelregion (8, 41) ein spezifisches Warnsignal generiert wird.

13. Totwinkelsystem (4) für ein durch ein Zugfahrzeug (2) und einen Anhänger (3) gebildetes Gespann (1), aufweisend zumindest eine Lidar-Sensorvorrichtung (6) zum Anordnen an dem Zugfahrzeug (2) und zum Erfassen von Lidar-Sensordaten aus einem Umgebungsbereich (5) des Gespanns (1) und eine Steuereinrichtung (7), welche dazu ausgelegt ist, ein Verfahren nach einem der vorhergehenden Ansprüche durchzuführen.

14. Gespann (1) aufweisend ein Zugfahrzeug (2), einen an das Zugfahrzeug (2) angekoppelten Anhänger (3) sowie ein Totwinkelsystem (4) nach Anspruch 13.
